# DEMANDE DE BREVET EUROPEEN

(11) **EP 2 293 015 A1**
(43) Date de publication de la demande: **09.03.2011**
(21) Numéro de dépôt: 10175202.0
(22) Date de dépôt: 03.09.2010
(51) Int. Cl.: G01C 21/16, G01C 22/00, G01C 15/00

(54) **Procédé de correction d'odométrie férroviaire**

(30) Priorité: 04.09.2009 FR 0904200
(71) Demandeur: Société Nationale des Chemins De Fer Français - SNCF, 75014 Paris (FR)
(72) Inventeur: Marion, Patrick, 94400, Vitry sur Seine (FR); Caravielhes, Jérôme, 91150, Etampes (FR)
(74) Mandataire: Bloch & Bonnétat

(57) **Abrégé**

Procédé de recalage de la position odométrique d'un tronçon d'une voie ferrée par rapport à la position odométrique dudit tronçon figurant dans une base de données de référence de la voie, au moyen du passage d'un train sur ladite voie ferrée avec mesure de sa vitesse d'avancement, caractérisé par le fait qu'il comporte en outre une mesure instantanée d'une vitesse angulaire dudit véhicule, lorsque celui-ci circule sur ledit tronçon, suivie d'une étape de calcul, à partir de la seule dite vitesse angulaire et de la vitesse d'avancement du véhicule, de la valeur d'un paramètre représentatif de la géométrie de la voie répertorié dans ladite base de données et d'une étape de calcul de la distance dont il faut faire varier l'odométrie du tronçon pour faire coïncider les données géométriques calculées avec celles données par la base de données.

## Description

Le domaine de la présente invention est celui des chemins de fer et plus précisément celui des essais de qualification des véhicules ferroviaires.

Les divers matériels roulants destinés à circuler sur des voies ferrées font l'objet d'évaluations pour obtenir une certification leur permettant de circuler sur le réseau d'un ou plusieurs des pays de l'Union européenne. Cette certification a pour but de garantir la sécurité des passagers et des agents des chemins de fer vis-à-vis des risques inhérents à ce mode de locomotion et en particulier du risque de déraillement.

Pour s'assurer de la sécurité du matériel roulant des essais sont tout d'abord effectués en statique pour mesurer divers paramètres comme la raideur des systèmes amortisseurs et de façon plus globale la fonction de transfert de la transmission des vibrations. Des essais dynamiques, en condition réelle de circulation sur des rails, doivent aussi être effectués, au cours desquels sont mesurés divers paramètres comme le niveau des vibrations, la valeur de l'accélération subie par la caisse des voitures ou les bogies, la force de contact entre la roue et le rail, ... etc. Ces essais sont faits dans des conditions moyennes, représentatives de l'utilisation normale et dans des conditions extrêmes pour juger de la qualité du matériel roulant.

Les résultats de ces essais sont toutefois extrêmement dépendants de la qualité de la voie sur laquelle ils sont réalisés. De façon optimale ils devraient être réalisés sur une voie d'essai dont on connaîtrait parfaitement les caractéristiques. Mais pour des raisons de coût et d'absence de disponibilité de telles voies, les essais sont effectués sur des voies existantes, qui sont utilisées de façon régulière pour le trafic commercial et qui ne sont rendues disponibles pour les essais que de façon occasionnelle et affectées à cette tâche que dans des délais relativement courts. Ces voies sont bien évidemment imparfaites et plus ou moins adaptées à la conduite d'essais de qualification. Leurs caractéristiques précises sont par ailleurs connues de façon insuffisamment précise pour réaliser des essais de qualification dans les meilleures conditions.

Il n'est pas possible, pour les équipes en charge des essais, de faire réaliser, au préalable, une cartographie précise de la voie sur laquelle sera effectué l'essai. Cette opération serait de toute façon longue et extrêmement coûteuse et n'est donc pas envisageable de façon pratique.

On connait pour cela, par les demandes de brevets US 2009/187296, US 2006/253233 ou US 2004/204882, des méthodes de recalage de la base de données d'une voie, dans le but d'en améliorer la connaissance et d'éliminer les erreurs qui peuvent s'y être introduites. Ces méthodes sont, d'une part, des méthodes relativement lourdes à mettre en oeuvre, avec un nombre important de paramètres à analyser et, d'autre part, nécessitent que la voie soit affectée spécifiquement à cette utilisation. Il n'en est pas de même pour l'évaluation dynamique d'un véhicule qui doit s'effectuer sur une voie qui lui est affectée avec un préavis court, et pour laquelle il faut se contenter des caractéristiques approximatives connues.

Il est donc nécessaire de trouver une méthode la plus simple possible d'analyse de la qualité du matériel roulant, qui permette de tenir compte des imperfections de la voie sur laquelle a lieu l'essai et qui permette de discriminer les phénomènes qui proviennent de la voie de ceux qui proviennent du véhicule en essai. Elle doit permettre de mesurer, en temps réel au cours de l'essai, les corrections à apporter au référentiel des caractéristiques de la voie.

Une des caractéristiques essentielles qu'il convient de corriger, réside dans l'odométrie de la voie, c'est à dire dans la connaissance des distances des divers points remarquables sur la voie, par rapport à un point choisi comme origine. Cette odométrie corrigée doit en particulier donner avec précision les distances kilométriques d'entrée et de sortie des courbes de la voie.

Les bases de données qui caractérisent une voie la divisent en une série de tronçons, qui sont, soit des tronçons droits, dits en alignement, soit des tronçons en courbe circulaires, soit enfin des tronçons dits de raccordement qui assurent la nécessaire transition entre les tronçons en alignement et les tronçons en courbe, au niveau du rayon de courbure et du dévers de la voie, le dévers étant la différence de hauteur d'un rail par rapport à l'autre. Tous ces tronçons rectilignes et courbes sont répertoriés et, pour chacun d'eux, est indiqué, entre autres, la distance odométrique d'entrée dans le tronçon, la distance odométrique de sortie, le rayon de courbure sur ce tronçon et le dévers appliqué à la voie. Ces bases de données comportent un certain nombre d'erreurs, dues entre autres à des mauvais positionnements des bornes géographiques (ou points kilométriques Pk) qui servent de points de repère aux conducteurs et qui sont installés sur le côté de la voie, ou encore dues à des dérives, dans le temps, dans la constitution physique de la voie.

Des méthodes ont été développées pour réaliser un essai sur un véhicule, en palliant l'insuffisance, d'une part, de connaissance de l'odométrie réelle de la voie sur laquelle sera réalisé l'essai et, d'autre part, l'écart éventuel entre les référentiels dû aux différents systèmes d'odométrie utilisés pour mesurer les distances. On connaît ainsi une méthode manuelle qui consiste à classer les divers tronçons en catégories géographiques statistiques puis à comparer les résultats des mesures effectuées lors d'un essai avec les données sol correspondant à la catégorie statistique du tronçon. On comprend bien que cette méthode est fastidieuse à mettre en oeuvre. On connait aussi une méthode consistant à placer le long de la voie des bornes de synchronisation de façon à baliser les entrées et sorties réelles des courbes de la voie. Cette méthode est, comme déjà indiqué, longue et coûteuse et mal adaptée à la conduite d'essais sur une voie en service affectée tardivement à l'essai à conduire.

La présente invention a pour but de remédier à ces inconvénients en proposant une méthode extrêmement simple de recalage de l'odométrie d'une voie de circulation ferroviaire, qui soit simple et rapide à mettre en oeuvre, même sur une voie imparfaitement connue, et qui ne nécessite pas de moyens coûteux.

A cet effet, l'invention a pour objet un procédé de recalage de la position odométrique d'un tronçon d'une voie ferrée par rapport à la position odométrique dudit tronçon figurant dans une base de données de référence de la voie, au moyen du passage d'un train sur ladite voie ferrée avec mesure de sa vitesse d'avancement, caractérisé par le fait qu'il comporte en outre une mesure sur ledit tronçon d'une vitesse angulaire dudit véhicule, suivie d'une étape de calcul, à partir de la seule dite vitesse angulaire mesurée et de la vitesse d'avancement du véhicule, de la valeur d'un paramètre représentatif de la géométrie de la voie, répertorié dans ladite base de données et d'une étape de calcul de la distance dont il faut faire varier l'odométrie du tronçon pour faire coïncider, à l'entrée ou à la sortie dudit tronçon, ladite donnée géométrique calculée avec celle donnée par la base de données.

A l'aide de cette mesure d'une vitesse angulaire lorsque le véhicule en essai circule sur le tronçon dont on cherche à recaler l'odométrie, on est capable de retrouver la forme, au moins dans un plan, d'un paramètre géométrique représentatif du tronçon, comme par exemple le rayon de courbure ou le dévers de la voie. A l'aide de cette mesure on peut détecter les instants où ce paramètre évolue, c'est à dire connaître l'instant d'entrée (ou de sortie) dans un tronçon rectilignes ou circulaire. Par comparaison de la distance à laquelle se produit cette évolution du paramètre mesurée avec celle figurant dans la base de données on peut recaler la position du tronçon concerné et ainsi déduire le recalage en distance à appliquer aux informations tirées de la base de données. La méthode est ainsi extrêmement simple puisqu'il suffit, en connaissant la vitesse d'avancement du véhicule, de mesurer une seule vitesse angulaire, pour effectuer un recalage de l'odométrie qui permette l'évaluation du comportement dynamique d'un véhicule.

De façon préférentielle, la vitesse angulaire mesurée est la vitesse angulaire de lacet du véhicule en essai.

Celle-ci permet de déterminer le rayon horizontal de la courbe du tronçon sur lequel circule le véhicule, qui représente le paramètre discriminant le plus significatif.

De façon plus préférentielle, le recalage s'effectue par comparaison du rayon de courbure du tronçon, obtenu en rapportant la vitesse angulaire de lacet mesurée à la vitesse d'avancement sur le tronçon considéré, avec le rayon de courbure dudit tronçon figurant dans ladite base de données de référence.

Dans un autre mode de réalisation, la vitesse angulaire mesurée est la vitesse angulaire de roulis du véhicule en essai.

Dans un mode alternatif de réalisation, ladite vitesse de roulis est obtenue à l'aide d'un moyen de mesure de l'inclinaison de la verticale apparente dans le véhicule en essai.

Dans un encore autre mode de réalisation, le recalage s'effectue par comparaison du dévers de la voie sur le tronçon, obtenu en rapportant la vitesse angulaire de roulis mesurée à la vitesse d'avancement sur le tronçon considéré, avec le dévers sur ledit tronçon figurant dans ladite base de données de référence.

L'invention porte également sur un système d'évaluation d'un véhicule ferroviaire en essai sur une voie ferrée décomposée en tronçons, les caractéristiques desdits tronçons étant décrites dans une base de données de référence de ladite voie, ledit système comportant des moyens de mesure de la vitesse linéaire et d'au moins une vitesse angulaire instantanée dudit véhicule, caractérisé par le fait qu'il met en oeuvre un procédé tel que décrits précédemment.

L'invention porte enfin sur un véhicule ferroviaire équipé d'un système d'évaluation tel que décrit précédemment.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une représentation schématique d'un véhicule en essai sur une voie ferrée,
- la figure 2 est une représentation schématique, en vue de dessus, d'une voie ferroviaire sur laquelle se déroule un essai de qualification.
- la figure 3 est une représentation schématique, en fonction de la distance odométrique, d'une information (ici, le rayon de courbure) contenue dans une base de données d'une voie ferroviaire ;
- la figure 4 est une vue schématique de l'enregistrement des données d'un capteur (ici, une accélération) lors d'un essai réalisé à une vitesse donnée sur la voie correspondante.

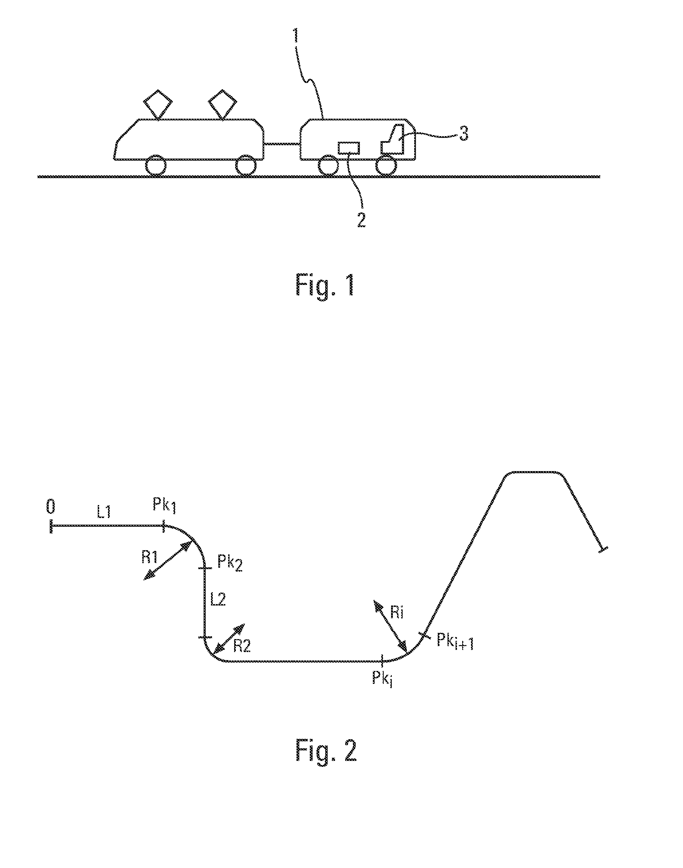

En se référant à la figure 1 on voit un train constitué pour l'évaluation du comportement dynamique d'un véhicule ferroviaire 1. Dans ce véhicule est installé un enregistreur de paramètres 2, raccordé à des capteurs placés dans le véhicule, qui mesurent des valeurs susceptibles de varier en fonction des imperfections de la voie. Ces données enregistrées sont analysées par un système d'évaluation 3 du véhicule, qui en déduit des grandeurs représentatives du comportement du véhicule et qui compare celles-ci à des valeurs limites admissibles.

La figure 2 représente une voie constituée par une suite de tronçons droits et courbes, ces deux types de tronçons étant raccordés par des tronçons de raccordement, non représentés. Les coordonnées d'entrée et de sortie des tronçons courbes sont données par les distances kilométriques Pki et Pki+1 à partir d'un point origine O ; les courbes sont décrites par leur rayon de courbure Ri.

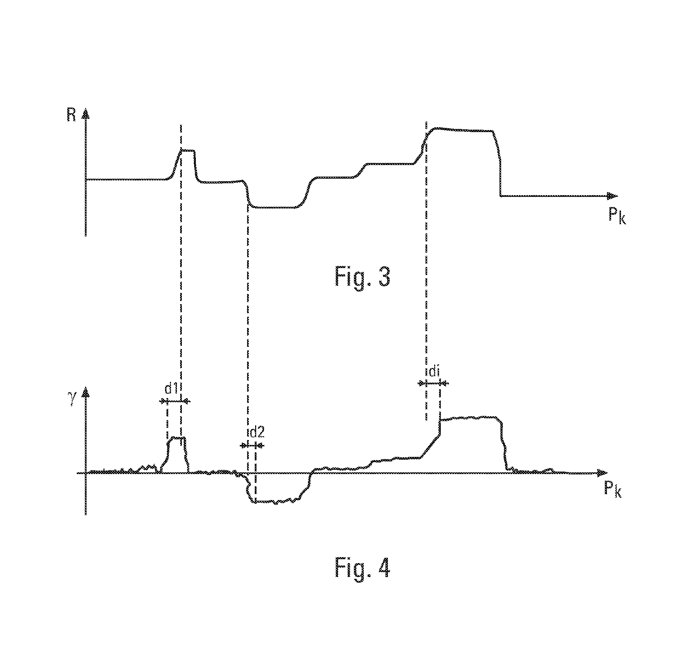

En se référant à la figure 3, on voit la représentation d'une des caractéristiques d'une voie ferroviaire (ici le rayon de courbure) en fonction de la distance odométrique, telle qu'elle est issue de la base de données entretenue par le gestionnaire de la voie. Pour réaliser cette base de données, toutes les voies sont découpées en tronçons élémentaires aux caractéristiques homogènes, qui peuvent être des tronçons d'alignement, des tronçons de raccordement ou des tronçons courbes circulaires. Pour chaque tronçon la base de données fournit des informations, entre autres, de longueur du tronçon, au travers des distances odométriques des points de départ et d'arrivée du tronçon, et de rayon de courbure lorsque celui-ci est courbe. Elle donne également pour les tronçons courbes la valeur du dévers qui est appliqué à la voie pour faciliter la tenue en courbe des trains.

La figure 4 donne les résultats d'enregistrement d'un paramètre de mesure, lorsqu'un train en essai circule sur la voie correspondante. Ce paramètre peut être une accélération subie par une voiture ou un bogie, un niveau vibratoire, la force d'appui d'une roue sur le rail ou toute autre valeur dictée par les besoins de la qualification recherchée. Il est exprimé en fonction de la distance odométrique Pk, placée en abscisses et mesurée à partir du point origine de la voie. Cette représentation est choisie pour être homogène avec les paramètres descriptifs de la voie (rayon, dévers, ...) qui sont eux aussi exprimés en fonction de cette distance odométrique. L'abscisse pour chacun des points de la courbe est déterminée en transposant l'enregistrement, effectué originellement en fonction du temps, par une intégration de la vitesse linéaire du véhicule en essai.

Pour pouvoir associer les résultats de mesures au tracé de la voie et relier les réponses du véhicule en essai aux défauts de celle-ci, il importe tout d'abord de recaler l'arrivée sur un tronçon avec la distance de référence d'entrée dans le tronçon figurant dans la base de données. Une mesure de distance calculée à partir d'un compte-tour sur un essieu, associée à la mesure de la vitesse linéaire du train, ne donnerait pas de résultat fiable à cause des phénomènes de glissement de la roue sur le rail ; une mesure de positionnement par GPS se heurterait, quant à elle, aux tunnels et aux zones d'ombre de ce système.

Pour pallier ces inconvénients il est proposé d'adjoindre aux enregistrements effectués une mesure instantanée de la vitesse angulaire de lacet subie par la voiture en essai. Cette mesure peut être réalisée, par exemple, à l'aide d'un gyromètre. La mesure de la vitesse angulaire de lacet est alors rapportée à la vitesse linéaire du train pour trouver la valeur instantanée du rayon de courbure du tronçon sur lequel circule le véhicule en essai. Connaissant le rayon de courbure mesuré, il est possible de détecter les instants où le rayon de courbure évolue ou bien où il devient constant, et donc d'identifier les distances odométriques pour lesquels le véhicule est entré dans un tronçon en alignement ou dans un tronçon courbe.

La comparaison de la valeur du rayon de courbure avec celui théorique fourni par la base de donnée donne l'écart d en distance odométrique existant entre les valeurs odométriques des points d'entrée (ou de sortie) théoriques et réels des divers tronçons. Cette valeur d étant, a priori, connue en continu il est possible d'effectuer un recalage précis pour chaque tronçon et ainsi d'analyser les enregistrements en relation avec les informations de la base de données en éliminant les erreurs dues au positionnement des points kilométriques dans la base de données de référence. On peut alors voir comment réagit le véhicule en essai aux caractéristiques physiques de la voie et à ses imperfections locales, telles qu'elles sont fournies par la base de données de référence.

On peut ainsi mettre en évidence, à l'aide de l'enregistrement d'un seul paramètre de vitesse angulaire, pratiquement toutes les erreurs et imprécisions de la base de données de référence et, une fois qu'un recalage a été effectué, analyser dans l'absolu le comportement du véhicule, quelle que soit la voie affectée à l'essai et quel que soit le préavis donné pour cet essai.

La méthode exposée se différencie donc, par sa simplicité, des méthodes de l'art antérieur qui effectuaient la mesure d'un nombre important de paramètres, ce qui se conçoit lorsqu'il s'agit d'établir ou de mettre à jour la base de données d'une voie, mais qui se révèle superfétatoire dans le cas de l'évaluation du comportement dynamique d'un véhicule.

La méthode de recalage a été décrite en comparant le rayon de courbure mesuré à l'aide de la vitesse angulaire de lacet fournie par un gyromètre. Le recalage pourrait tout aussi bien être effectué en utilisant un autre paramètre existant dans la base de données de référence et exprimé en fonction de la distance odométrique, tel par exemple que le dévers de la voie. Une telle méthode suppose la mesure de la vitesse angulaire de roulis du véhicule en essai, en lieu et place de la vitesse angulaire de lacet, par exemple à l'aide d'un gyromètre convenablement disposé. Elle pourrait aussi être appliquée en prenant pour moyen de mesure, l'inclinaison de la verticale apparente dans le véhicule, à condition de faire passer le train à une vitesse ne correspondant pas à la vitesse optimale de confort, c'est-à-dire la vitesse pour laquelle la verticale apparente se trouve dans le plan de symétrie du véhicule en essai.

Cette méthode pourrait encore être mise en oeuvre en prenant pour moyen de recalage la vitesse de tangage du véhicule si la base de données contient une information sur la pente de la voie au niveau du tronçon considéré.

La méthode exposée, qui détecte les corrections d'odométrie à prendre en compte dans l'évaluation du comportement dynamique du véhicule à partir d'une seule vitesse angulaire, peut être mise en oeuvre en mesurant par exemple deux vitesses angulaires et en comparant les résultats trouvés à partir de chacune des vitesses angulaires, dans le but d'améliorer la précision obtenue sur la correction d'odométrie. La méthode revendiquée reste cependant mise en oeuvre indépendamment pour chacun des calculs de correction de l'odométrie.

Bien que l'invention ait été décrite en relation avec plusieurs modes de réalisation particuliers, il est bien évident qu'elle comprend tous les équivalents techniques des moyens décrits ainsi que leurs combinaisons si celles-ci entrent dans le cadre de l'invention.

## Revendications

1. Procédé de recalage de la position odométrique d'un tronçon d'une voie ferrée par rapport à la position odométrique dudit tronçon figurant dans une base de données de référence de la voie, au moyen du passage d'un train sur ladite voie ferrée avec mesure de sa vitesse d'avancement,
**caractérisé par le fait qu'**il comporte en outre une mesure sur ledit tronçon d'une vitesse angulaire dudit véhicule, suivie d'une étape de calcul, à partir de la seule vitesse angulaire mesurée et de la vitesse d'avancement du véhicule, de la valeur d'un paramètre, représentatif de la géométrie de la voie, répertorié dans ladite base de données et d'une étape de calcul de la distance dont il faut faire varier l'odométrie du tronçon pour faire coïncider, à l'entrée ou à la sortie dudit tronçon, ladite donnée géométrique calculée avec celle donnée par la base de données.

2. Procédé selon la revendication 1 dans lequel la vitesse angulaire mesurée est la vitesse angulaire de lacet du véhicule en essai.

3. Procédé selon la revendication 2 dans lequel le recalage s'effectue par comparaison du rayon de courbure du tronçon, obtenu en rapportant la vitesse angulaire de lacet mesurée à la vitesse d'avancement sur le tronçon considéré, avec le rayon de courbure dudit tronçon figurant dans ladite base de données de référence.

4. Procédé selon la revendication 1 dans lequel la vitesse angulaire mesurée est la vitesse angulaire de roulis du véhicule en essai.

5. Procédé selon les revendications 1 et 4 en combinaison dans lequel ladite vitesse de roulis est obtenue à l'aide d'un moyen de mesure de l'inclinaison de la verticale apparente dans le véhicule en essai.

6. Procédé selon l'une des revendications 4 ou 5 dans lequel le recalage s'effectue par comparaison du dévers de la voie sur le tronçon, obtenu en rapportant la vitesse angulaire de roulis mesurée à la vitesse d'avancement sur le tronçon considéré, avec le dévers sur ledit tronçon figurant dans ladite base de données de référence.

7. Système d'évaluation d'un véhicule ferroviaire en essai sur une voie ferrée décomposée en tronçons, les caractéristiques desdits tronçons étant décrites dans une base de données de référence de ladite voie, ledit système (3) comportant des moyens de mesure (2) de la vitesse linéaire et d'au moins une vitesse angulaire instantanée dudit véhicule, **caractérisé par le fait qu'**il met en oeuvre un procédé selon l'une des revendications 1 à 6.

8. Véhicule ferroviaire équipé d'un système d'évaluation selon la revendication précédente.
